# EUROPÄISCHE PATENTSCHRIFT

(11) **EP 3 442 057 B1**
(45) Veröffentlichungstag und Bekanntmachung des Hinweises auf die Patenterteilung: **13.05.2020**
(21) Anmeldenummer: 18184524.9
(22) Anmeldetag: 19.07.2018
(51) Int. Cl.: H01M 4/38, H01M 10/0525, H01M 10/44

(54) **PRÄFORMIERTE SILIZIUMBASIERTE NEGATIVE ELEKTRODE UND VERFAHREN ZU IHRER HERSTELLUNG**
PREFORMED SILICON-BASED NEGATIVE ELECTRODE AND METHOD FOR PRODUCING THE SAME
ÉLECTRODE NÉGATIVE À BASE DE SILICIUM PRÉFORMÉE ET SON PROCÉDÉ DE FABRICATION

(30) Priorität: 24.07.2017 DE 102017212680
(43) Veröffentlichungstag der Anmeldung: 13.02.2019
(73) Patentinhaber: VOLKSWAGEN AKTIENGESELLSCHAFT, 38440 Wolfsburg (DE)
(72) Erfinder: Schramm, Linda-Susann, 38100 Braunschweig (DE)
(74) Vertreter: Schrell, Andreas

(56) Entgegenhaltungen:
- DE-T5-112015 000 403
- US-A1- 2016 020 491
- US-A1- 2016 172 665
- US-A1- 2016 172 710

## Beschreibung

Die vorliegende Erfindung betrifft siliziumbasierte negative Elektroden, insbesondere mit reduziertem initialen irreversiblen Kapazitätsverlust, insbesondere für den Einsatz in Batterien, Verfahren zu deren Herstellung, sowie die siliziumbasierten negativen Elektroden enthaltenden Batterien und Vorrichtungen.

Lithium-Ionen-Batterien (LIB) gelten heute als die Schlüsseltechnologie in der Elektromobilität. Sie müssen hinsichtlich ihrer Kosten, ihres Gewichts, der Energiedichte, ihrer Lebensdauer, ihrer Sicherheit und in ihrer Ladungsdauer deutlich optimiert werden.

Durch den Einsatz innovativer Elektrodenmaterialien ist es möglich, die Energiedichte von Lithium-Ionen-Batterien zu steigern (135 Wh/kg (2013) auf 280 Wh/kg (2018)) und damit die Reichweite von Elektrofahrzeugen erheblich zu erhöhen (von 190 km auf 500 km). In dieser Hinsicht ist Silizium ein vielversprechendes Aktivmaterial. Es besitzt, im Vergleich zum kommerziell eingesetzten Graphit, eine zehnfach höhere Kapazität und ein ähnlich niedriges Lithiierungspotential (0,5 V vs. Lithium-Lithium⁺). Da Silizium das zweithäufigste Material in der Erdkruste und damit die Herstellung mit geringen Kosten verbunden ist, das Material ungefährlich im Umgang und nicht toxisch ist, ist es aus industrieller Sicht attraktiv.

Bekannt ist es, dass während der ersten Zyklisierungen einer Batterie eine Solid Elektrolyte Interface (SEI), also eine Grenzschicht zwischen negativer Elektrode und Elektrolyt, in Folge einer reduktiven Zersetzung verschiedener Elektrolytkomponenten, wie Lösungsmittel, Additive und Verunreinigungen gebildet wird, welche bei den erreichten Spannungen thermodynamisch und elektrochemisch nicht stabil ist.

Die Bildung der SEI ist einerseits existentiell für die Funktionalität und die Lebensdauer von Lithium-Ionen-Batterien, da sie im Idealfall über eine gute ionische Leitfähigkeit verfügt und zugleich elektrisch isolierend wirkt. Damit unterdrückt sie weitestgehend, durch ihre kinetisch limitierende Wirkung, weitere Zersetzungen des Elektrolyten und wirkt weiteren Kapazitätsverlusten entgegen. Darüber hinaus schützt die SEI die Struktur des Aktivmaterials (Graphit) vor Exfoliation und damit die Zelle vor beachtlichen Kapazitätsverlusten.

Allerdings kommt es während der Formierung, also der Bildung, der SEI stets auch zu einem irreversiblen Kapazitätsverlust, welcher der Formierung zuzuschreiben ist.

Im Fall von kommerziellen Graphit-Elektroden ist der irreversible Kapazitätsverlust in Folge der SEI-Formation mit circa 2 bis 5 % im Verhältnis zu dem Silizium-haltiger negativer Elektroden mit 20 bis 80 % sehr gering.

Im Fall der für den irreversiblen Kapazitätsverlust besonders anfälligen Silizium-haltigen negativen Elektroden muss zwischen zwei verschiedenen Arten von irreversiblen Kapazitätsverlusten unterschieden werden. Neben dem Kapazitätsverlust während der anfänglichen Formierung, also einem initialen Kapazitätsverlust, kommt es zusätzlich zu einem Kapazitätsverlust in Folge des Atmens während der Zyklisierung.

Eine fundamentale Herausforderung, die der kommerziellen Anwendung von Silizium-haltigen negativen Elektroden im Wege steht, ist daher die enorme Volumenänderung, das heißt das Atmen, des Materials beim Lithiierungs- und Delithiierungsprozess (Li₄Si₁₅: 280 % - 300 % vgl. LiC₆: 10 - 11 %). Das Atmen der Silizium-haltigen negativen Elektrode hat die Pulverisierung der Partikel und damit weitere Probleme zur Folge. Insbesondere hat es verheerende Auswirkungen auf den Erhalt der Elektrodenarchitektur, was besonders bei hohen Flächenbeladungen zum Tragen kommt. Dies bewirkt Kontaktverluste innerhalb der Elektrode sowie zwischen Elektrode und Stromkollektor und spiegelt sich in einer Verschlechterung der elektrischen Leitfähigkeit wider. Weiterhin resultiert es in einem ständigen Aufreißen und Wachsen der SEI. Dies hat wiederum einen kontinuierlichen Li-Ionen-Verbrauch, einen ansteigenden Innenwiderstand in der Zelle, damit eine geringere Coulombsche Effizienz (CE) und eine ungenügende Zyklenstabilität zur Folge.

Der initiale Kapazitätsverlust ist stark davon abhängig, welche Siliziumspezies verwendet wird. Die Spezien können sich unter anderem in der Art des Materials (Silizium-Legierung, Silizium-Komposit, Siliziumoxid, beschichtetes Silizium), in der Form, sowie in der Kristallinität (amorph, kristallin oder polykristallin) und in der Partikelgröße (Nano-, Mikro-Bereich, Größenverteilung) und damit in der SEI-Oberfläche unterscheiden. Dabei haben speziell Partikel im Nanobereich eine aktive Oberfläche und damit einen höheren initialen Kapazitätsverlust. Die SEI ist in Folge eines konstanten und besser über die aktive Oberfläche verteilten Stroms in diesem Fall besonders dünn.

DE 11 2015 000 403 T5 offenbart ein Verfahren zur Verbesserung der Leistung einer siliziumbasierten negativen Elektrode durch Vorlithiierung der siliziumbasierten negativen Elektrode in einem Elektrolyten mit Dimethoxyethan, Fluorethylencarbonat und einem Lithiumsalz. Insbesondere wird die Präformation einer SEI an der siliziumbasierten negativen Elektrode im Vorlithiierungselektrolyt durch Anlegen einer Spannung für eine Zeit von 1 bis 100 Stunden offenbart.

US 9,293,770 B2 offenbart ein Verfahren zur Beschichtung einer siliziumbasierten negativen Elektrode mit einer Graphenoxidschicht. Die Graphenoxidschicht wird gemäß dieses Verfahrens mittels Elektrophorese auf eine siliziumbasierte negative Elektrode aufgebracht. Strom wird für mindestens 0,5 min bis 30 min mit einer Spannung von 0,5 V bis 2,0 V angelegt.

US 8,801,810 B1 offenbart ein Verfahren zur Herstellung einer Lithium-Ionen-Batterie, wobei besagte Lithium-Ionen-Batterie zuerst mit einer konstanten C-Rate bis zu einer bestimmten Spannung geladen wird, anschließend unter konstanter Spannung gehalten wird, bis die Stromstärke einen bestimmten Wert erreicht. Anschließend wird die Lithium-Ionen-Batterie für eine bestimmte Zeit gelagert, wobei die Lagerzeit von 0 über 12, 24, 48 und 72 Stunden betragen kann. Anschließend wird die Lithium-Ionen-Batterie mit einer konstanten C-Rate zu einer bestimmten Spannung entladen und dann unter konstanter Spannung die Zelle weiter entladen bis zu einem bestimmten Kapazitätswert.

Der vorliegenden Erfindung liegt das technische Problem zugrunde, Elektroden und Batterien bereitzustellen, die die vorgenannten Nachteile nicht aufweisen, insbesondere eine Reduzierung des initialen irreversiblen Kapazitätsverlustes und eine Reduzierung der für die SEI-Formierung benötigten Zeit ermöglichen.

Die vorliegende Erfindung löst das ihr zugrundeliegende technische Problem durch die Bereitstellung der Lehren der unabhängigen Ansprüche.

Erfindungsgemäß bereitgestellt wird ein Verfahren zur Herstellung mindestens einer siliziumbasierten negativen Elektrode, wobei das Verfahren folgende Verfahrensschritte umfasst:
a) Bereitstellen mindestens eines siliziumbasierten negativen Elektrodenvorläufers, eines Elektrolyten und mindestens einer lithiumbasierten Gegenelektrode,
b) Anlegen von mindestens drei aufeinanderfolgenden, konstanten Spannung von jeweils 1,2 V - 1,8 V, 400 mV - 800 mV und 200 mV - 390 mV zwischen dem mindestens einen siliziumbasierten negativen Elektrodenvorläufer und der mindestens einen lithiumbasierten Gegenelektrode für jeweils einen Zeitraum von mindestens 35 Minuten und
c) Erhalt der siliziumbasierten negativen Elektrode.

Die vorliegende Verfahrensweise zeichnet sich demgemäß dadurch aus, dass in einem ersten Verfahrensschritt a) ein siliziumbasierter negativer Elektrodenvorläufer, ein Elektrolyt und mindestens eine lithiumbasierte Gegenelektrode bereitgestellt werden, insbesondere in einem diese Komponenten aufweisenden Gehäuse, zum Beispiel in einer galvanischen, gegebenenfalls zusammen mit einem Separator, Zelle, wobei in einem folgenden Verfahrensschritt b) mindestens drei aufeinanderfolgende, insbesondere unmittelbar aufeinanderfolgende, konstante Spannungen von jeweils 1,2 V - 1,8 V, 400 mV - 800 mV und 200 mV - 390 mV zwischen dem mindestens einen siliziumbasierten negativen Elektrodenvorläufer und der mindestens einen lithiumbasierten Gegenelektrode für jeweils einen Zeitraum von mindestens 35 Minuten angelegt werden, um so in einem folgenden Verfahrensschritt c) eine siliziumbasierte negative Elektrode, im Folgenden auch als präformierte siliziumbasierte negative Elektrode bezeichnet, zu erhalten. Die Präformierung dient erfindungsgemäß der Ausbildung einer SEI auf der erhaltenen siliziumbasierten Elektrode, die sodann vorzugsweise nach Entfernung aus dem Elektrolyten, Waschen und Trocknen, zur Herstellung einer Zelle, insbesondere Batterie, eingesetzt werden kann.

Die erfindungsgemäße Vorgehensweise präformiert einen siliziumbasierten negativen Elektrodenvorläufer in einem der anschließenden Zellbildung vorgelagerten Prozess. Damit kann der irreversible Kapazitätsverlust bereits vor der eigentlichen Zyklisierung deutlich reduziert und die relative Kapazität deutlich erhöht werden. Zudem kann in bevorzugter Ausführungsform durch die erfindungsgemäße Verfahrensweise die sich anschließende Formierungszeit für die SEI deutlich verkürzt werden, zum Beispiel auf 1 Tag oder weniger verkürzt werden.

In besonders bevorzugter Ausführungsform sieht das erfindungsgemäße Verfahren die Verfahrensabfolge a), b), c) chronologisch in genau dieser Reihenfolge vor. In einer weiteren Ausführungsform können zumindest zwei der genannten Verfahrensschritte gleichzeitig miteinander oder zeitlich teilweise überlappend durchgeführt werden, insbesondere die Verfahrensschritte b) und c).

In einer besonders bevorzugten Ausführungsform können vor, zwischen und/oder nach den Verfahrensschritten a), b), c) weitere Verfahrensschritte durchgeführt werden. In einer weiteren bevorzugten Ausführungsform kann vorgesehen sein, dass das erfindungsgemäße Verfahren allein aus den Verfahrensschritten a), b), c), ohne Durchführung von Zwischenschritten, besteht. In einer besonders bevorzugten Ausführungsform kann eine Verfahrensweise vorgesehen sein, gemäß der die Verfahrensschritte a), b), c) ohne Durchführung von Zwischenschritten und ohne Durchführung von nachgelagerten Schritten durchgeführt wird.

Im Zusammenhang mit der vorliegenden Erfindung wird unter der "negativen Elektrode" die Elektrode verstanden, die beim Entladen als Anode und beim Laden als Kathode fungiert und unter der positiven Elektrode wird die Elektrode verstanden, die beim Entladen als Kathode und beim Laden als Anode fungiert.

Im Zusammenhang mit der vorliegenden Erfindung wird unter einem "Aktivmaterial" einer Elektrode das Material verstanden, dass der Aufnahme oder Abgabe von Lithium-Ionen dient, insbesondere Silizium, Graphit oder beides im Falle einer negativen Elektrode oder insbesondere Lithiummetalloxide im Fall einer positiven Elektrode.

Im Zusammenhang mit der vorliegenden Erfindung wird unter dem "Elektrodenmaterial" das Material verstanden, das den elektronenleitenden Elektrodenträger einer Elektrode beschichtet und insbesondere aus Aktivmaterial, Binder sowie gegebenenfalls weiteren Substanzen, zum Beispiel Leitadditive, zusammengesetzt sein kann.

Im Zusammenhang mit der vorliegenden Erfindung wird unter dem Begriff "Binder" ein einzelner Binder oder eine Mischung verschiedener Binder als Binderkomponenten verstanden, insbesondere weist der Binder verschiedene Binderkomponenten und gegebenenfalls weitere Additive auf.

In Zusammenhang mit der vorliegenden Erfindung wird unter einem "siliziumbasierten negativen Elektrodenvorläufer" eine als Elektrode geeignete Struktur, umfassend ein auf einem elektronenleitenden Elektrodenträger angeordnetes Elektrodenmaterial, insbesondere Aktivmaterial verstanden, welches bevorzugt Silizium umfasst oder aus diesem besteht.

In besonders bevorzugter Ausführungsform liegt auf dem Elektrodenträger als Elektrodenmaterial Aktivmaterial, ein Binder sowie gegebenenfalls weitere Substanzen, zum Beispiel Leitadditive, vor.

In besonders bevorzugter Ausführungsform umfasst das Aktivmaterial Silizium und Graphit.

In einer besonders bevorzugten Ausführungsform umfasst der siliziumbasierte negative Elektrodenvorläufer Silizium als Aktivmaterial oder Silizium und Graphit als Aktivmaterial und jeweils einen Binder sowie gegebenenfalls weitere Substanzen, zum Beispiel Leitadditive, bevorzugt besteht aus diesen.

In einer bevorzugten Ausführungsform ist der siliziumbasierte negative Elektrodenvorläufer ein Vorläufer einer siliziumbasierten negativen Kompositelektrode.

In bevorzugter Ausführungsform ist die siliziumbasierte negative Elektrode eine Elektrode, die mindestens 5 Gew.-%, bevorzugt mindestens 10 Gew.-%, bevorzugt mindestens 20 Gew.-%, bevorzugt mindestens 30 Gew.-%, bevorzugt mindestens 40 Gew.-%, bevorzugt mindestens 50 Gew.-%, bevorzugt mindestens 60 Gew.-%, bevorzugt mindestens 70 Gew.-%, bevorzugt mindestens 80 Gew.-%, Silizium aufweist, jeweils bezogen auf das Gesamtgewicht des Elektrodenmaterials.

Im Zusammenhang mit der vorliegenden Erfindung werden mit Komponenten des Elektrodenmaterials verknüpfte Prozentangaben als Gewichtsprozentangaben verstanden, sofern nicht anders angegeben.

In bevorzugter Ausführungsform ist die siliziumbasierte negative Elektrode eine Elektrode, die zusätzlich zu Silizium Graphit als Aktivmaterial aufweist und wobei das Graphit in einer Menge von mindestens 5 Gew.-%, bevorzugt mindestens 10 Gew.-%, bevorzugt mindestens 20 Gew.-%, bevorzugt mindestens 30 Gew.-%, bevorzugt mindestens 40 Gew.-%, bevorzugt mindestens 50 Gew.-%, bevorzugt mindestens 60 Gew.-%, bevorzugt mindestens 70 Gew.-%, bevorzugt mindestens 80 Gew.-% Graphit vorliegt, jeweils bezogen auf das Gesamtgewicht des Elektrodenmaterials.

In besonders bevorzugter Ausführungsform addiert die in der siliziumbasierten negativen Elektrode vorhandene Menge an Silizium zusammen mit Graphit auf 100 Gew.- % des in der Elektrode vorhandenen Aktivmaterials auf.

In einer besonders bevorzugten Ausführungsform umfasst das Elektrodenmaterial der siliziumbasierten negativen Elektrode neben dem Aktivmaterial Binder, vorzugsweise in einer Menge von mindestens 1, vorzugsweise mindestens 2, vorzugsweise mindestens 3, vorzugsweise mindestens 4, vorzugsweise mindestens 5, vorzugsweise mindestens 6, vorzugsweise mindestens 7, vorzugsweise mindestens 8 Gew.-%, jeweils bezogen auf das Gesamtgewicht des Elektrodenmaterials.

Unter dem Begriff "lithiumbasierte Gegenelektrode" wird erfindungsgemäß eine positive lithiumbasierte Elektrode verstanden, bevorzugt enthaltend mindestens 70 Gew.-%, bevorzugt mindestens 80 Gew.-%, bevorzugt mindestens 90 Gew.-%, bevorzugt 100 Gew.-% Lithium oder Lithiumverbindung, jeweils bezogen auf das Gesamtgewicht des Elektrodenmaterials.

Bevorzugt umfasst das Aktivmaterial der lithiumbasierten Gegenelektrode mindestens eine Lithiummetalloxid-Verbindung, wie Lithiumcobaltdioxid (LiCoO₂), Lithiummangandioxid (LiMnO₂), Lithiummangantetraoxid (LiMn₂O₄), Lithiumnickelmangancobaltoxid (LiNi_{0,33}Mn_{0,33}Co_{0,33}O₂), eine Kombination davon oder besteht aus einem oder mehreren dieser Komponenten.

In einer besonders bevorzugten Ausführungsform umfasst das Aktivmaterial der lithiumbasierten Gegenelektrode Hochvoltspinell (LiMn_{1.5}Ni_{0.5}O₄), eine hochenergiegeschichtete Verbindung (Li₂MnO₃-LiNO₂(N=Mn, Cr, Co, Ni), Lithiummetallphosphate (LiMPO₄(M=Mn, Fe, Co), eine Kombination davon oder besteht aus einem oder mehreren dieser Komponenten.

In einer bevorzugten Ausführungsform der vorliegenden Erfindung werden in Verfahrensschritt b) die mindestens drei aufeinanderfolgenden, konstanten Spannungen unmittelbar nacheinander angelegt oder durch Spannungsunterbrechungen getrennt voneinander nacheinander angelegt.

In einer bevorzugten Ausführungsform betragen in Verfahrensschritt b) die mindestens drei aufeinanderfolgenden, konstanten Spannungen jeweils 1,3 bis 1,6 V, insbesondere 1,5 V, 500 bis 700 mV, insbesondere 600 mV und 200 bis 350 mV, insbesondere 300 mV.

In einer besonders bevorzugten Ausführungsform werden in Verfahrensschritt b) die mindestens drei aufeinanderfolgenden, konstanten Spannungen für mindestens 35 Minuten, mindestens 45 Minuten, mindestens 1 Stunde, oder mindestens 2 Stunden angelegt.

In einer bevorzugten Ausführungsform werden in Verfahrensschritt b) die mindestens drei aufeinanderfolgenden, konstanten Spannungen jeweils für 35 bis 45 Minuten, insbesondere 35 bis 60 Minuten, insbesondere 1 bis 1,5 Stunden, insbesondere 1 bis 2, 3, 4, 5, 6, 7, 8, 9, 10, 11, 12, 13, 14, insbesondere für 1,5 Stunden bis 3, 4, 5, 6, 7, 8, 9, 10, 11, 12, 13 oder 14 Stunden angelegt.

In einer bevorzugten Ausführungsform werden in Verfahrensschritt b) die mindestens drei aufeinanderfolgenden, konstanten Spannungen für jeweils die gleichen oder verschiedene Zeiträume angelegt.

In einer bevorzugten Ausführungsform werden in Verfahrensschritt b) die mindestens drei aufeinanderfolgenden, konstanten Spannungen für jeweils genau 35 Minuten bis 4,5 Stunden, insbesondere genau 1 bis 2,5 Stunden, insbesondere genau 2 Stunden angelegt.

In einer bevorzugten Ausführungsform entspricht der in Verfahrensschritt b) angelegte Strom einer C-Rate von C/5 bis C/20.

In einer bevorzugten Ausführungsform entspricht der in Verfahrensschritt b) angelegte Strom einer C-Rate von C/10.

Unter dem Begriff "C-Rate" wird erfindungsgemäß der relative Lade- oder Entladestrom, bezogen auf die theoretische, spezifische Kapazität der mindestens einen siliziumbasierten negativen Elektrode, verstanden. Ein Ladestrom von C/5 bedeutet beispielsweise, dass eine galvanische Zelle mit einer Kapazität von 1 Ah mit 1/5 A geladen wird.

In einer bevorzugten Ausführungsform der vorliegenden Erfindung wird die in Verfahrensschritt c) erhaltene siliziumbasierte negative Elektrode nach Waschen des in Schritt b) behandelten Elektrodenvorläufers mit einer organischen Waschlösung, insbesondere zur Entfernung von Elektrolyt, und bevorzugt anschließendem Trocknen erhalten.

In bevorzugter Ausführungsform ist die organische Waschlösung ausgewählt aus der Gruppe bestehend aus einem Elektrolyten, Elektrolytkomponenten, wie Salze oder Additive, Ethylencarbonat (EC), Propylencarbonat (PC), Diethylcarbonat (DEC), Dimethylcarbonat (DMC), Fluorethylencarbonat (FEC), Difluorethylencarbonat (DFEC), Vinylencarbonat (VC), Vinylethylencarbonat (VEC), Ethylenmethylcarbonat (EMC) und Gemischen davon.

In bevorzugter Ausführungsform der vorliegenden Erfindung kann nach Verfahrensschritt c), das heißt nach Erhalt der silizium-basierten negativen Elektrode, zum Beispiel nach einem im Rahmen von Verfahrensschritt c) erfolgtem Waschen oder auch unmittelbar nach Durchführung von Verfahrensschritt b) eine Zyklisierung, insbesondere mindestens eine Zyklisierung, insbesondere 2, 3, 4, 5, 6, 7, 8, 9, 10 oder mehr Zyklisierungen durchgeführt werden.

Im Zusammenhang mit der vorliegenden Erfindung wird unter einem "Elektrolyten" eine Zusammensetzung verstanden, umfassend mindestens ein aprotisches, nicht-wässriges Lösungsmittel, mindestens ein Lithiumsalz sowie gegebenenfalls weitere Substanzen, insbesondere bestehend aus diesen.

Bevorzugt ist das mindestens eine aprotische, nicht-wässrige Lösungsmittel ausgewählt aus der Gruppe bestehend aus Propylencarbonat (PC), Ethylencarbonat (EC), Dimethylcarbonat (DMC), Diethylcarbonat (DEC), Ethylenmethylcarbonat (EMC), Fluorethylencarbonat (FEC), Difluorethylencarbonat (DFEC), Vinylencarbonat (VC), Vinylethylencarbonat (VEC) und einer Kombination davon.

Bevorzugt ist das mindestens eine Lithiumsalz ausgewählt aus der Gruppe bestehend aus Lithiumhexafluorophosphat, Lithiumtetrafluoroborat, Lithiumperchlorat, Lithiumhexafluoroarsenat, Lithiumdioxalatoborat, Lithiumdifluorooxalatoborat, Lithiumfluorooxalatoborat, Lithiumnitrat, Lithiumbis(fluorosulfonyl)imid und einer Kombination davon.

In besonders bevorzugter Ausführungsform betrifft die vorliegende Erfindung auch Elektroden, insbesondere siliziumbasierte negative Elektroden, herstellbar gemäß einem erfindungsgemäßen Verfahren.

In besonders bevorzugter Ausführungsform betrifft die vorliegende Erfindung auch Verfahren zur Herstellung von Halbzellen, Zellen oder Batterien, wobei erfindungsgemäße siliziumbasierte negative Elektroden in Halbzellen oder Zellen, insbesondere Zellen zusammen mit weiteren Zellkomponenten in an sich üblicher Weise verbaut und erfindungsgemäße Elektroden aufweisende Halbzellen und Batterien erhalten werden.

In besonders bevorzugter Ausführungsform betrifft die vorliegende Erfindung daher auch Halbzellen, Zellen und mindestens eine Zelle aufweisende Batterien, insbesondere Lithium-Ionen-Batterien, enthaltend mindestens eine erfindungsgemäße Elektrode, insbesondere eine Elektrode herstellbar nach einem der erfindungsgemäßen Verfahren.

Unter dem Begriff "Lithium-Ionen-Batterie" wird erfindungsgemäß sowohl eine primäre als auch sekundäre Lithium-Ionen-Batterie, bevorzugt eine sekundäre Lithium-Ionen-Batterie, verstanden. Eine primäre Lithium-Ionen-Batterie ist eine nicht-wiederaufladbare Lithium-Ionen-Batterie, eine sekundäre Lithium-Ionen-Batterie ist eine wiederaufladbare Lithium-Ionen-Batterie.

In besonders bevorzugter Ausführungsform umfassen die Batterien Pouch-Zellen, Knopfzellen oder prismatische Zellen.

In besonders bevorzugter Ausführungsform betrifft die vorliegende Erfindung auch Vorrichtungen, enthaltend mindestens eine erfindungsgemäße Elektrode, insbesondere mindestens eine erfindungsgemäße Batterie, insbesondere Roboter oder Elektrofahrzeuge, beispielsweise elektrische angetriebene Autos, Hybridfahrzeuge oder E-Bikes, oder Elektroflugzeuge, beispielsweise Drohnen oder Satelliten, elektrisch betriebene Wasserfahrzeuge, wie Sportboote, Unterwasserfahrzeuge und Modellbauschiffe oder portable Geräte, wie Lampen oder Geräte der Kommunikations- und/oder Unterhaltungsgeräte, zum Beispiel Telefone, Smartphones, Laptops, Notebooks sowie Tablets.

Weitere vorteilhafte Ausgestaltungen ergeben sich aus den Unteransprüchen.

Die Erfindung wird anhand der nachfolgenden Beispiele und dazugehöriger Figuren näher erläutert.

Die Figuren zeigen:

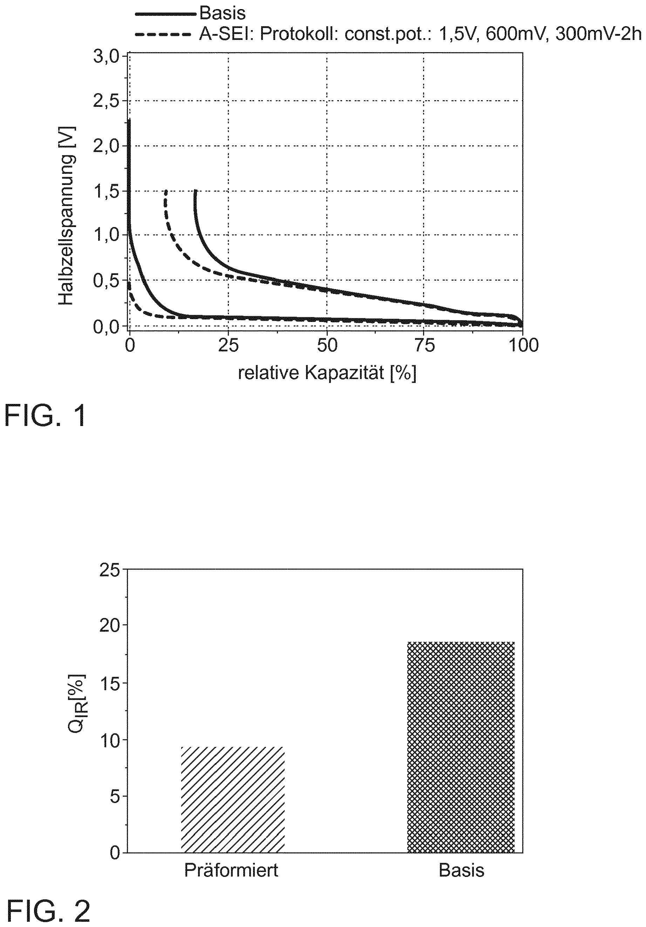

- Figur 1: die Halbzellspannung in Volt im Verhältnis zur relativen Kapazität (in Prozent %) während des ersten Formierungszyklus. Verglichen wird eine in Verfahrensschritt c) erhaltene erfindungsgemäße siliziumbasierte negative Elektrode (A-SEI, gestrichelte Graphen) mit einer nicht erfindungsgemäßen, nämlich nicht präformierten, siliziumbasierten negativen Elektrode (Basis, durchgezogene Graphen). Dargestellt ist die Halbzellspannung im Verhältnis zur relativen Kapazität während der Lithiierung (jeweils der linke Graph) und der Delithiierung (jeweils der rechte Graph).
- Figur 2: den initialen, irreversiblen Kapazitätsverlust (Q_{IR}) in Prozent der Elektroden gemäß Figur 1,

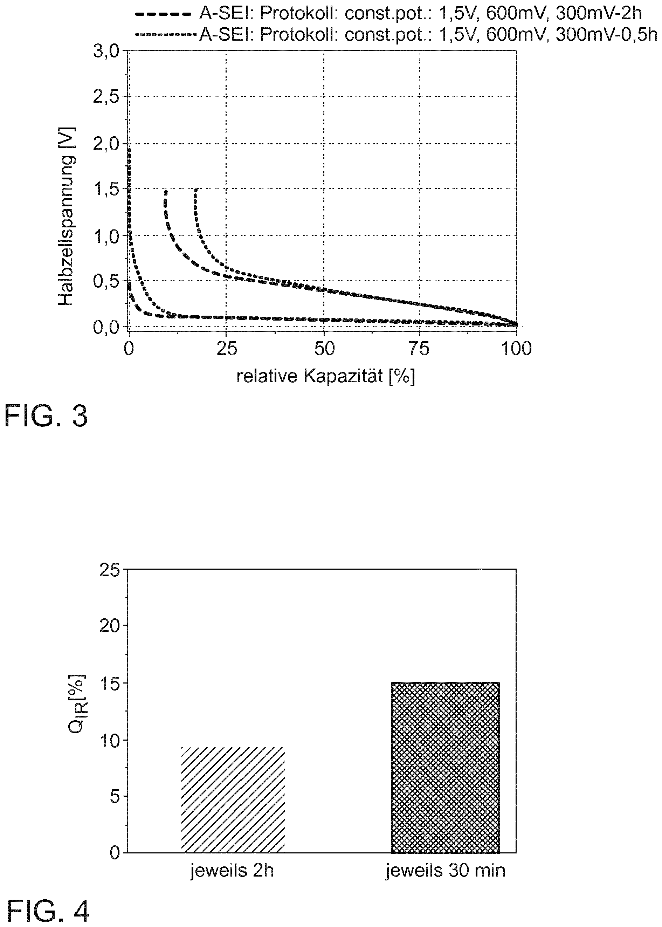

- Figur 3: die Halbzellspannung in Volt im Verhältnis zur relativen Kapazität (in Prozent %) während des ersten Formierungszyklus. Verglichen wird eine in Verfahrensschritt c) erhaltene erfindungsgemäße präformierte siliziumbasierte negative Elektrode (A-SEI, gestrichelte Graphen) mit einer unzureichend präformierten siliziumbasierten negativen Elektrode (A-SEI, gepunktete Graphen). Dargestellt ist die Halbzellspannung im Verhältnis zur relativen Kapazität während der Lithiierung (jeweils der linke Graph) und der Delithiierung (jeweils der rechte Graph) und
- Figur 4: den initialen, irreversiblen Kapazitätsverlust (Q_{IR}) in Prozent der Elektroden gemäß Figur 3.

### Beispiele

### Beispiel 1

1.1 Zur Elektrodenherstellung wird folgende Rezeptur verwendet:
   20 Gew.-% Silizium (Nanostructured and Armorphous Materials Inc. -Si, 98 + %, 30 - 50 nm) - ;
   60 Gew.-% Graphit (Imerys - C- NERGY™ SFG6)
   12 Gew.-% Ruß (carbon black) (Imerys - C- NERGY™ SUPER C65)
   8 Gew.-% Binder (Carboxymethyl Cellulose (700.000 g/mol): Poly(acrylic acid) (450.000 g/mol): Poly(acrylic acid-co-maleic acid) (350 g/mol), 1:1:1).
1.2 Zunächst werden diese Feststoffe mit Ausnahme des Binders im Dissolver mit WolframCarbid-Kugeln (Elektrodenträger) vermengt und anschließend durch Zugabe des Binders in zwei Schritten verdünnt und die Viskosität eingestellt, wobei der pH-Wert der erhaltenen Paste 3 beträgt.
1.3 Die so hergestellten Elektrodenvorläufer werden wie folgt präformiert.
   Es wird eine Knopfzelle geöffnet, der Elektrodenvorläufer eingelegt und für jeweils zwei Stunden Spannungen von 1,5 V, anschließend 600 mV und zuletzt 300 mV angelegt und konstant gehalten. Hierbei dient metallisches Lithium als Gegen- oder Opferanode. Der angelegte Strom entspricht einer C-Rate von C/10.
1.4 Die so präformierte siliziumbasierte negative Elektrode wird aus der Knopfzelle entnommen, mit Dimethylcarbonat gewaschen und in eine weitere Knopfzelle für eine Testung eingebaut.
1.5 Als Vergleichselektrode wurde eine Elektrode in gleicher Rezeptur und Herstellweise gemäß Absatz 1.1, 1.2 und 1.4, allerdings ohne Durchführung einer Präformierung gemäß Absatz 1.3, hergestellt (als Basis bezeichnet).
1.6 Sowohl die erfindungsgemäß präformierte als auch die nicht präformierte Elektrode wurden hinsichtlich ihrer Halbzellspannung und ihres Kapazitätsverlustes im ersten Formierungszyklus untersucht.

Anhand Figur 1 wird die Verbesserung der relativen Kapazität der erfindungsgemäßen Elektrode im ersten Formierungszyklus deutlich. Der initiale, irreversible Kapazitätsverlust kann zudem durch das erfindungsgemäße Verfahren von knapp 20 % auf 9 % gesenkt werden (Figur 2).

### Beispiel 2

2.1 In einem weiteren Ausführungsbeispiel wird als Vergleichselektrode ein siliziumbasierter negativer Elektrodenvorläufer aus den gleichen Materialien wie in Beispiel 1 beschrieben hergestellt und folgendermaßen präformiert.
   Der gemäß Absatz 1.2 in Beispiel 1 erhaltene Elektrodenvorläufer wird in eine Knopfzelle eingelegt, wobei metallisches Lithium als Gegenanode dient. Aufeinanderfolgend werden konstante Spannungen von 1,5 V, 600 mV und 300 mV für jeweils 30 Minuten an den siliziumbasierten negativen Elektrodenvorläufer angelegt.
   Der so präformierte siliziumbasierte negative Elektrodenvorläufer wird aus der Knopfzelle entfernt, mit Dimethylcarbonat gewaschen und in eine andere Knopfzelle eingebaut.
2.2 Zusätzlich wurde eine erfindungsgemäße siliziumbasierte negative Elektrode in gleicher Rezeptur, Herstellweise und Präformierung wie in Beispiel 1, Absatz 1.1 bis 1.4 beschrieben hergestellt.
2.3 Sowohl die erfindungsgemäß präformierte (Absatz 2.2) als auch die nicht erfindungsgemäß präformierte (Absatz 2.1) Elektrode wurden hinsichtlich ihrer Halbzellspannung und ihres Kapazitätsverlustes im ersten Formierungszyklus untersucht.
2.4 Wie sich aus Figur 3 ergibt, weist eine erfindungsgemäß präformierte Elektrode eine deutliche Verbesserung ihrer relativen Kapazität im ersten Formierungszyklus auf, während eine unzureichend präformierte Elektrode (konstante Spannungen für jeweils lediglich 30 Minuten) eine deutlich schlechtere relative Kapazität aufweist. Darüber hinaus ist gemäß Figur 4 der initiale, irreversible Kapazitätsverlust der erfindungsgemäß präformierten Elektrode deutlich geringer gegenüber dem irreversiblen Kapazitätsverlust der nicht erfindungsgemäß präformierten Elektrode.

## Patentansprüche

1. Verfahren zur Herstellung mindestens einer siliziumbasierten negativen Elektrode, wobei das Verfahren folgende Verfahrensschritte umfasst:
a) Bereitstellen mindestens eines siliziumbasierten negativen Elektrodenvorläufers, eines Elektrolyten und mindestens einer lithiumbasierten Gegenelektrode,
b) Anlegen von mindestens drei aufeinanderfolgenden, konstanten Spannungen von jeweils 1,2 V - 1,8 V, 400 mV - 800 mV und 200 mV - 390 mV zwischen dem mindestens einen siliziumbasierten negativen Elektrodenvorläufer und der mindestens einen lithiumbasierten Gegenelektrode für jeweils einen Zeitraum von mindestens 35 Minuten und
c) Erhalt der siliziumbasierten negativen Elektrode.

2. Verfahren nach Anspruch 1, wobei die drei aufeinanderfolgenden, konstanten Spannungen jeweils 1,5 V, 600 mV und 300 mV betragen.

3. Verfahren nach Anspruch 1 oder 2, wobei die lithiumbasierte Gegenelektrode aus metallischem Lithium besteht.

4. Verfahren nach einem der vorstehenden Ansprüche, wobei die jeweiligen aufeinanderfolgenden, konstanten Spannungen in Verfahrensschritt b) für jeweils einen Zeitraum von 35 Minuten bis 14 Stunden angelegt werden.

5. Verfahren nach einem der vorstehenden Ansprüche, wobei die drei aufeinanderfolgenden, konstanten Spannungen in Verfahrensschritt b) jeweils für die gleichen oder verschiedene Zeiträume angelegt werden.

6. Verfahren nach Anspruch 5, wobei die aufeinanderfolgenden, konstanten Spannungen in Verfahrensschritt b) für jeweils genau zwei Stunden angelegt werden.

7. Verfahren nach einem der vorstehenden Ansprüche, wobei der angelegte Strom einer C-Rate von C/5 bis C/20 entspricht.

8. Verfahren nach Anspruch 7, wobei der angelegte Strom einer C-Rate von C/10 entspricht.

9. Verfahren nach einem der vorstehenden Ansprüche, wobei der siliziumbasierte negative Elektrodenvorläufer ein Vorläufer einer siliziumbasierten negativen Kompositelektrode ist.

10. Verfahren nach einem der vorstehenden Ansprüche, wobei des Elektrodenmaterial des siliziumbasierten negativen Elektrodenvorläufers Aktivmaterial und mindestens einen Binder aufweist.

11. Verfahren nach einem der vorstehenden Ansprüche, wobei das Aktivmaterial des siliziumbasierten negativen Elektrodenvorläufers Silizium und Graphit umfasst oder aus diesen besteht.

12. Verfahren nach einem der vorstehenden Ansprüche, wobei in Verfahrensschritt c) die siliziumbasierte negative Elektrode nach Waschen mit einer organischen Waschlösung und Trocknen erhalten wird.

13. Siliziumbasierte negative Elektrode, herstellbar nach einem der Verfahren der Ansprüche 1 bis 12.

14. Lithium-Ionen-Batterie, umfassend mindestens eine siliziumbasierte negative Elektrode, herstellbar nach einem Verfahren der Ansprüche 1 bis 12 oder gemäß Anspruch 13.

15. Vorrichtung, umfassend mindestens eine Lithium-Ionen-Batterie nach Anspruch 14.

## Claims

1. Method for producing at least one silicon-based negative electrode, wherein the method comprises the following method steps:
a) providing at least one silicon-based negative electrode precursor, an electrolyte and at least one lithium-based counterelectrode,
b) applying at least three successive, constant voltages of respectively 1.2 V-1.8 V, 400 mV-800 mV and 200 mV-390 mV between the at least one silicon-based negative electrode precursor and the at least one lithium-based counterelectrode for in each case a time period of at least 35 minutes, and
c) obtaining the silicon-based negative electrode.

2. Method according to Claim 1, wherein the three successive, constant voltages are respectively 1.5 V, 600 mV and 300 mV.

3. Method according to Claim 1 or 2, wherein the lithium-based counterelectrode consists of metallic lithium.

4. Method according to any of the preceding claims, wherein the respective successive, constant voltages in method step b) are applied for in each case a time period of 35 minutes to 14 hours.

5. Method according to any of the preceding claims, wherein the three successive, constant voltages in method step b) are applied in each case for the same or different time periods.

6. Method according to Claim 5, wherein the successive, constant voltages in method step b) are applied for in each case exactly two hours.

7. Method according to any of the preceding claims, wherein the applied current corresponds to a C rate of C/5 to C/20.

8. Method according to Claim 7, wherein the applied current corresponds to a C rate of C/10.

9. Method according to any of the preceding claims, wherein the silicon-based negative electrode precursor is a precursor of a silicon-based negative composite electrode.

10. Method according to any of the preceding claims, wherein the electrode material of the silicon-based negative electrode precursor comprises active material and at least one binder.

11. Method according to any of the preceding claims, wherein the active material of the silicon-based negative electrode precursor comprises or consists of silicon and graphite.

12. Method according to any of the preceding claims, wherein in method step c) the silicon-based negative electrode is obtained after washing with an organic washing solution and drying.

13. Silicon-based negative electrode, producible according to one of the methods in Claims 1 to 12.

14. Lithium-ion battery, comprising at least one silicon-based negative electrode, producible according to a method in Claims 1 to 12 or according to Claim 13.

15. Device, comprising at least one lithium-ion battery according to Claim 14.

## Revendications

1. Procédé de fabrication d'au moins une électrode négative à base de silicium, le procédé comprenant les étapes suivantes :
a) fourniture d'au moins un précurseur d'électrode négative à base de silicium, d'un électrolyte et d'au moins une contre-électrode à base de lithium,
b) application d'au moins trois tensions constantes successives respectivement de 1,2 V - 1,8 V, 400 mV - 800 mV et 200 mV - 390 mV entre l'au moins un précurseur d'électrode négative à base de silicium et l'au moins une contre-électrode à base de lithium respectivement pendant une période d'au moins 35 minutes et
c) obtention de l'électrode négative à base de silicium.

2. Procédé selon la revendication 1, les trois tensions constantes successives étant respectivement de 1,5 V, 600 mV et 300 mV.

3. Procédé selon la revendication 1 ou 2, la contre-électrode à base de lithium se composant d'un lithium métallique.

4. Procédé selon l'une des revendications précédentes, les tensions constantes successives respectives à l'étape b) étant appliquées respectivement pendant une période de 35 minutes à 14 heures.

5. Procédé selon l'une des revendications précédentes, les trois tensions constantes successives à l'étape b) étant appliquées respectivement pendant des périodes identiques ou différentes.

6. Procédé selon la revendication 5, les tensions constantes successives à l'étape b) étant appliquées respectivement pendant exactement deux heures.

7. Procédé selon l'une des revendications précédentes, le courant appliqué correspondant à un taux C de C/5 à C/20.

8. Procédé selon la revendication 7, le courant appliqué correspondant à un taux C de C/10.

9. Procédé selon l'une des revendications précédentes, le précurseur d'électrode négative à base de silicium étant un précurseur d'une électrode composite négative à base de silicium.

10. Procédé selon l'une des revendications précédentes, le matériau d'électrode du précurseur d'électrode négative à base de silicium possédant un matériau actif et au moins un liant.

11. Procédé selon l'une des revendications précédentes, le matériau d'électrode du précurseur d'électrode négative à base de silicium comprenant du silicium et du graphite ou étant constitué de ceux-ci.

12. Procédé selon l'une des revendications précédentes, à l'étape c), l'électrode négative à base de silicium étant obtenue après lavage avec une solution de lavage organique et séchage.

13. Électrode négative à base de silicium, pouvant être fabriquée conformément à un procédé selon l'une des revendications 1 à 12.

14. Batterie aux ions de lithium, comprenant au moins une électrode négative à base de silicium pouvant être fabriquée conformément à un procédé selon l'une des revendications 1 à 12 ou selon la revendication 13.

15. Dispositif, comprenant au moins une batterie aux ions de lithium selon la revendication 14.
